# EUROPEAN PATENT APPLICATION

(11) **EP 2 104 204 A1**
(43) Date of publication of application: **23.09.2009**
(21) Application number: 07850769.6
(22) Date of filing: 18.12.2007
(51) Int. Cl.: H02K 7/116, H02K 5/22, H02K 11/00, H02K 11/02

(54) **MOTOR WITH SPEED REDUCER, AND ITS MANUFACTURING METHOD**

(30) Priority: 21.12.2006 JP 2006343766
(71) Applicant: Mabuchi Motor Co., Ltd., Matsudo-shi, Chiba 270-2280 (JP)
(72) Inventor: SAYA, Tsutomu, Matsudo-shi Chiba 270-2280 (JP); KURATA, Junya, Matsudo-shi Chiba 270-2280 (JP)
(74) Representative: 2K Patentanwälte Blasberg Kewitz & Reichel
(86) International application number: PCT/JP2007/074281
(87) International publication number: WO 2008/075666

(57) **Abstract**

An end bell supports brush arms which hold brushes, and allows a pair of input terminals connected to the corresponding brush arms to extend therethrough and to project to the exterior thereof. A terminal holder having a pair of terminals incorporated therein is provided. The paired terminals include a pair of input connection portions contact-connected to the pair of corresponding input terminals, a pair of external terminals for establishing electrical connection outside the motor, and conductors for establishing electric wiring between the input connection portions and the external terminals. The terminal holder is assembled to the end bell from the outside of the motor section with a clearance formed therebetween, and electric connection is established between the paired input terminals and the paired input connection portions.

## Description

### TECHNICAL FIELD

The present invention relates to a motor equipped with a reducer for utilization in, for example, automotive electric equipment, as well as to a method of manufacturing the same.

### BACKGROUND ART

Miniature motors are used widely in automotive electric equipment, such as automotive door locking-unlocking devices, motor-driven mirror controlling and retracting devices, and air conditioners. Such miniature motors and their peripheral equipment are required to reduce electric noise that is generated at the time of their operation, and associated regulatory values are stipulated worldwide.

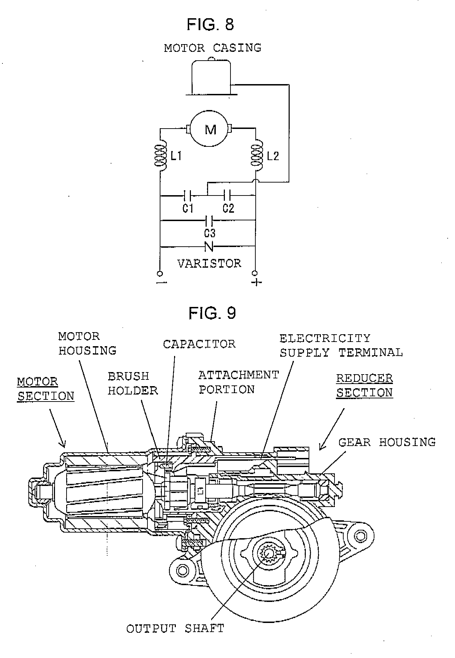

In order to reduce electric noise, electric elements, such as capacitors and choke coils, must be attached directly to a miniature motor. FIG. 8 shows an example of a noise killer circuit. As illustrated, the noise killer circuit is composed of choke coils L1 and L2, capacitors C1, C2, and C3, a varistor, etc. Reference symbol M denotes a motor.

FIG. 9 shows a conventional motor in which electric-noise killer elements are incorporated in a brush holder (refer to Patent Document 1). As illustrated, an output from a motor section is speed-reduced in a reducer section and is then transmitted to an output shaft. A gear housing is fixed to a motor housing in a butted condition. A brush holder is fixed to an attachment portion of the gear housing. In the interior of the brush holder, choke coils, capacitors, and a circuit breaker are disposed between brushes and proximal ends of electricity supply terminals in an electrically connected condition. The illustrated configuration is such that the elements are disposed within the brush holder. Thus, usable elements are limited, and a large number of elements cannot be mounted; particularly, a large element cannot be mounted.

FIG. 10 shows a motor disclosed in Patent Document 2. This motor is composed of a motor section and a reducer section, which reduces the rotational speed of the motor section. A brush device is assembled to an opening portion of a gear housing. In the brush device, electric components, such as choke coils and a circuit breaker, are integrally mounted on opposite sides of a substantially annular insulating substrate. In order to reduce the size of the illustrated motor, the electric components are disposed on the opposite sides of the insulating substrate to thereby be efficiently disposed within a housing. Nevertheless, a large space is still required for accommodation of the electric components. Furthermore, in the event of modification of a noise killer circuit, the assembly of the motor must be modified.

Particularly, although an arm type brush, in which a brush is held at a distal end of a plate-like arm having the nature of a spring, has a merit of low manufacturing cost, it requires a relatively large space. Thus, in use of such an arm type brush, a motor housing lacks interior space for disposition of the electric components. In recent years, reduction of noise level has been demanded, thereby raising the need of use of choke coils of various sizes. However, a limitation is imposed on the size of a choke coil to be incorporated. Particularly, in the case of a high-output motor, a choke coil having a long length and a large outside diameter must be incorporated within the housing; however, the housing cannot receive such a large choke coil.
Patent Document 1: Japanese Patent Application Laid-Open (*kokai*) No. 2004-56894
Patent Document 2: Japanese Patent Application Laid-Open (*kokai*) No. 2002-315274

### DISCLOSURE OF THE INVENTION

### PROBLEMS TO BE SOLVED BY THE INVENTION

An object of the present invention is to solve the above-mentioned problems, and to secure a sufficient space within a housing for mounting electric noise killer elements and a motor burnout protection element therein so as to enable incorporation of the elements into a motor end bell.

### MEANS FOR SOLVING THE PROBLEMS

The present invention provides a motor equipped with a reducer comprising a motor section and a reducer section assembled to the motor section, as well as a method of manufacturing the same. The motor section has a rotating shaft supported by a bearing provided at a center of an end bell fitted to an opening portion of a motor casing, the rotating shaft extending to the exterior of the motor section, a projecting end of the extending rotating shaft being rotatably supported by a bearing provided within the reducer section. The reducer section has a gear box, a worm mounted on the extending rotating shaft accommodated in the gear box, a worm wheel meshed with the worm, and an output shaft positioned at a center of the worm wheel and configured to be rotatable together with the worm wheel. The end bell supports brush arms which hold a pair of corresponding brushes in contact with a commutator, and allows a pair of input terminals connected to the corresponding brush arms to extend therethrough and to project to the exterior of the end bell for electrical connection. A terminal holder having a pair of terminals incorporated therein is provided. The paired terminals include a pair of input connection portions contact-connected to the pair of corresponding input terminals projecting from the end bell, a pair of external terminals for establishing electrical connection outside the motor, and conductors for establishing electric wiring between the input connection portions and the external terminals. The terminal holder is assembled to the end bell from the outside of the motor section with a clearance formed therebetween, and electric connection is established between the paired input terminals and the paired input connection portions.

A motor burnout protection element is incorporated into the end bell. A printed wiring board on which a noise killer element is mounted is inserted into the clearance formed between the terminal holder and the end bell and is fixedly held between the terminal holder and the end bell or by the terminal holder. An electric element is incorporated into the terminal holder.

### EFFECT OF THE INVENTION

According to the present invention, a sufficient space for attachment of an electric noise killer element and a motor burnout protection element can be secured within a housing, whereby the elements can be incorporated into the end bell of the motor. Furthermore, various requirements for killing of noise can be met merely by attachment of a relevant printed wiring board or replacement of printed wiring boards. Thus, by means of manufacturing various printed wiring boards in a process separated from a motor assembly line, all of currently conceivable noise killing methods can be coped with.

### BRIEF DESCRIPTION OF THE DRAWINGS

FIG. 1 is a longitudinal sectional view of a motor with a speed reducer configured in accordance with the present invention.
FIG. 2 is a pair of views showing an end bell shown in FIG. 1.
FIG. 3 is a series of views for explaining how a printed wiring board and a terminal holder are assembled to the end bell.
FIG. 4 is a view showing an end bell assembly.
FIG. 5 is a pair of views for explaining the terminal holder in detail.
FIG. 6 is a pair of views showing a state in which the terminal holder is assembled to the end bell.
FIG. 7 is a sectional view of an isolated gear box.
FIG. 8 is a diagram showing an example of a noise killer circuit.
FIG. 9 is a view showing a conventional motor in which electric noise killer elements are incorporated within a brush holder.

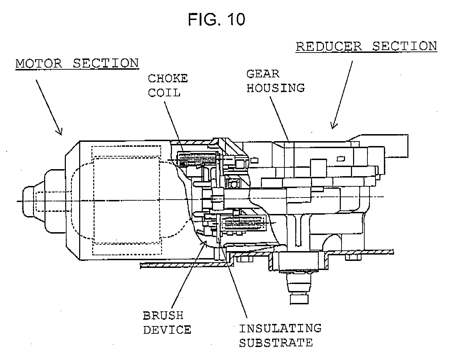

FIG. 10 is a view showing another conventional motor.

### BEST MODE FOR CARRYING OUT THE INVENTION

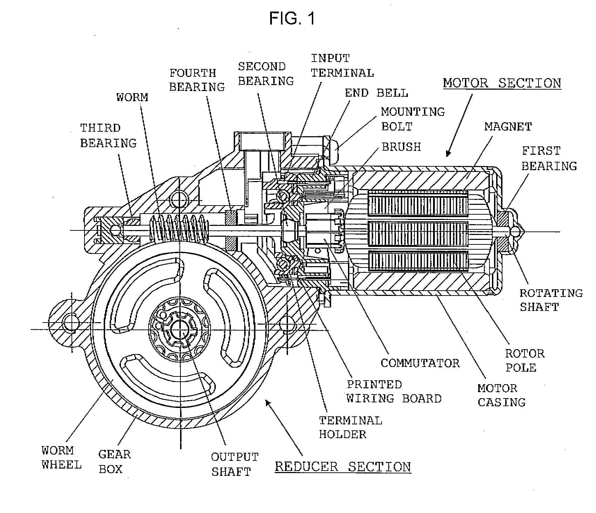

The present invention will next be described with reference to illustrations. FIG. 1 is a longitudinal sectional view of a motor with a speed reducer configured in accordance with the present invention. The motor with a speed reducer is an assembly of a motor section and a reducer section. The motor section is configured such that magnets are attached to the inner circumferential surface of a motor casing, which is formed of a metal material and assumes the form of a closed-bottomed tube. An end bell (casing cover) made of resin is fitted to an opening portion of the motor casing, thereby closing the opening portion. A commutator, and rotor poles composed of a laminated core and windings wound around the laminated core are mounted on a rotating shaft, thereby forming a motor rotor. A pair of input terminals are connected to a pair of brushes in contact with the commutator and project outward through the end bell from the motor section for electrical connection. One end of the rotating shaft is supported by a first bearing provided at the center of a bottom portion of the closed-bottomed tubular motor casing. The other end of the rotating shaft is supported by a second bearing housed in a central region of the end bell. The rotating shaft extends further outward from the motor section into the reducer section.

The reducer section is attached to the motor section by means of mounting bolts. The reducer section is configured such that a gear box made of resin houses a worm fixed on the rotating shaft, a worm wheel meshed with the worm, and other components. A projecting end of the rotating shaft is supported by a third bearing housed in the gear box. When the motor of the motor section is driven, the rotating shaft rotates. The rotation of the rotating shaft rotates the worm wheel via the worm at a reduced speed. The rotation of the worm wheel rotates an output shaft via a buffer member or the like. The rotation of the output shaft can, for example, open and close window glass of an automobile via an unillustrated drive means. Since the illustrated motor with a speed reducer is of high-output type, a fourth bearing is further provided for supporting the rotating shaft. Thus, the rotating shaft is rotatably supported by, in addition to two bearings provided in the motor section, two bearings provided in the reducer section such that the worm press-fitted onto the rotating shaft is located between the two bearings. In other words, the rotating shaft is rotatably supported by a total of four bearings. As will be described in detail later, the present invention is **characterized in that** a printed wiring board on which noise killer elements are mounted and a terminal holder are assembled to the end bell from the outside of the motor section along the axial direction of the rotating shaft.

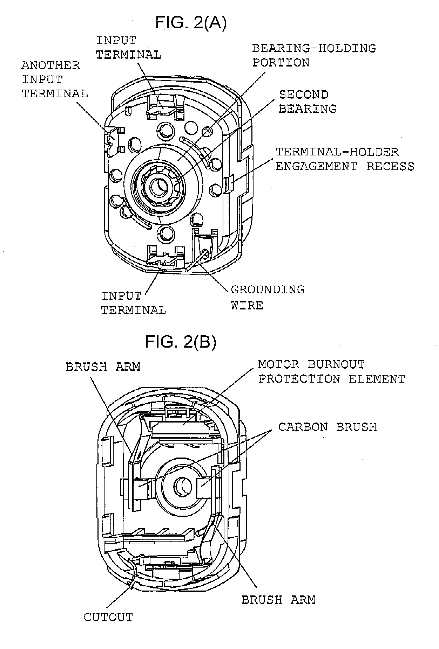

FIG. 2 is a pair of views showing the end bell shown in FIG. 1, wherein (A) is a view from the exterior of the motor, and (B) is a view from the interior of the motor. As mentioned above, the end bell made of resin is fitted to an opening portion of the motor casing. A bearing-holding portion of resin is formed integrally at a central portion of the end bell and houses the second bearing for the rotating shaft. A grounding wire is attached to the end bell in such a manner as to extend through the end bell and to be folded outward at a cutout provided on an end face of the end bell located on a side toward the motor casing. The grounding wire is used to ground a printed wiring board to the motor casing in the case where capacitors are mounted on the printed wiring board. The paired carbon brushes in contact with the commutator are connected to corresponding brush arms. The brush arms are conductive metal plates; hold the corresponding carbon brushes; and are supported by the end bell. The nature of a spring of the metal plates causes the carbon brushes to be pressed against the commutator, thereby establishing sliding contact therebetween. The paired input terminals connected to the brush arms extend through and project outward from the end bell for electrical connection. A motor burnout protection element, such as a circuit breaker or a PTC, can be assembled into the end bell. When the motor burnout protection element is assembled into the end bell, another input terminal is used in place of one of the paired input terminals so as to insert the motor burnout protection element in series into a circuit of electricity supply to the brushes.

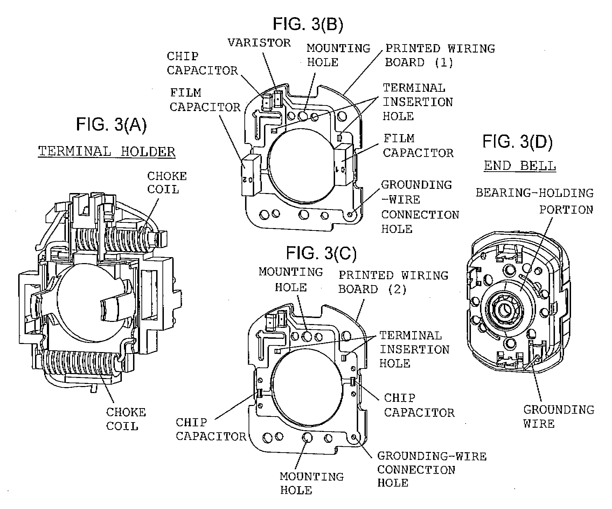

FIG. 3 is a series of views for explaining how the printed wiring board and the terminal holder are assembled to the end bell. FIG. 3(A) is a view of the terminal holder on which choke coils are mounted, as viewed from the exterior of the motor; (B)and (C) show two printed wiring boards of different types; and (D) is a view of the above-mentioned end bell as viewed from the exterior of the motor. As illustrated, the end bell has a cylindrical bearing-holding portion, whereas the terminal holder and the printed wiring board have respective circular center holes, into which the cylindrical bearing-holding portion is fitted. In a motor with a speed reducer, a dead space is present at the outside of an end bell. The present invention effectively utilizes the dead space, whereby the size of the motor can be reduced. Since the terminal holder is assembled to the exterior of the end bell, the motor section itself can be used in common with other applications without need to change design.

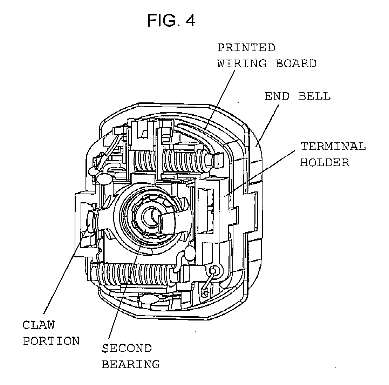

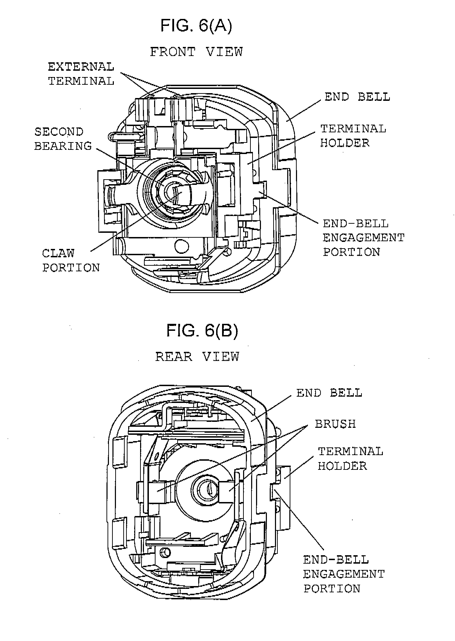

In the case of use of the printed wiring board, assembly is carried out as follows. First, the terminal holder shown in FIG. 3(A) and the printed wiring board shown in (B) or (C) are assembled together. Subsequently, the resultant terminal holder is assembled to the end bell, thereby yielding an end bell assembly. That is, the printed wiring board is fixedly held between the end bell and the terminal holder or by the terminal holder. FIG. 4 shows the thus-assembled end bell assembly. For the purpose of killing noise, relevant electric elements are employed, such as choke coils incorporated into the terminal holder, and capacitors, a varistor, etc. mounted on the printed wiring board. However, in applications which do not require killing of noise, the choke coils and the printed wiring board itself can be eliminated (see FIG. 6, which will be described later). The terminal holder and the end bell are assembled together with a clearance of about 1 mm to 2 mm therebetween. The printed wiring board is held in the clearance as needed.

FIG. 3(B) exemplifies a printed wiring board (1) on which a noise killer circuit is formed by use of a chip capacitor, a varistor, and two additional film capacitors. FIG. 3(C) exemplifies a printed wiring board (2) on which a noise killer circuit is formed by use of a chip capacitor, a varistor, and two additional chip capacitors. In order to cope with various requirements associated with applications, only the printed wiring board is changed accordingly, whereas the end bell, the terminal holder, etc. can be used in common.

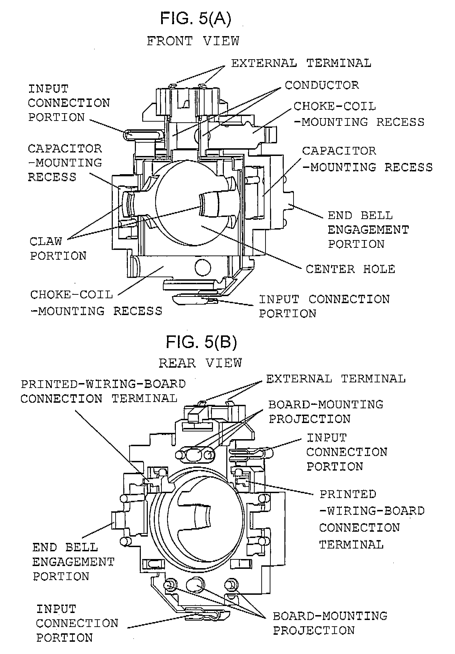

FIG. 5 is a pair of views for explaining the terminal holder in detail, wherein (A) is a view from the exterior of the motor section (front view), and (B) is a view from the interior of the motor section (rear view). The terminal holder is unitarily formed of resin and has a pair of conductive terminals incorporated therein. The paired terminals include a pair of input connection portions contact-connected to the pair of corresponding input terminals projecting from the end bell, a pair of external terminals for establishing electrical connection outside the motor, and conductors for establishing electric wiring between the input connection portions and the external terminals. By means of the conductors, the input connection portions and the corresponding external terminals can be connected directly to each other. Alternatively, in the case where choke coils and capacitors are mounted on the terminal holder as will be described later, as exemplified in FIG. 8, each of the choke coils can be connectedly inserted in series between the corresponding input connection portion and the corresponding external terminal, and the capacitors can be connected to the paired conductors, for example, such that opposite terminals of the capacitors are connected to the corresponding conductors. Each of the external terminals of the terminals can assume the form of a receptacle terminal, or a constricted form for allowing a lead wire to be soldered thereto. When the terminal holder is assembled to the end bell such that the printed wiring board is held therebetween or such that the printed wiring board is eliminated, the paired input connection portions are brought into contact with the corresponding input terminals projecting from the end bell, followed by soldering for electrical connection therebetween.

The terminal holder has a plurality of board-mounting projections (see FIG. 5(B)) on its rear side. The board-mounting projections are inserted into corresponding mounting holes of the printed wiring board (see FIGS. 3(B) and 3(C)). Then, the ends of the board-mounting projections are crushed, thereby fixedly uniting the terminal holder and the printed wiring board together. At this time, a pair of printed-wiring-board connection terminals (see FIG. 5(B)) connected electrically to the paired corresponding terminals are inserted through corresponding terminal insertion holes (see FIGS. 3(B) and 3(C)) formed in the printed wiring board. Then, the printed-wiring-board connection terminals are soldered on the rear surface of the printed wiring board. As a result, upon assembly of the terminal holder and the printed wiring board on which various electric noise killer elements are mounted, the terminals and the printed wiring board are electrically connected together. The terminal holder also has, on its front side, two integrally formed resin claw portions, which are located on the left and right sides of a center hole into which a bearing-holding portion of the end bell is fitted. The claw portions are adapted to support the fourth bearing by means of their projecting ends (see FIG. 1). The terminal holder also has, on its front side, two choke-coil-mounting recesses, which are formed in such a manner as to extend perpendicularly to the longitudinal direction of the motor and to face each other with the shaft therebetween. Choke coils or like elements can be mounted in the respective recesses. The terminal holder also has, on its front side, two rectangular capacitor-mounting recesses, which are formed in such a manner as to extend in parallel with the longitudinal direction of the motor and to face each other with the shaft therebetween. Capacitors or like elements can be mounted in the respective recesses. By means of mounting two choke coils and two capacitors directly on the terminal holder, a noise killer circuit can be formed without need to use a printed wiring board.

FIG. 6 is a pair of views showing a state in which the terminal holder is assembled to the end bell, wherein (A) is a view from the exterior of the motor section (front view), and (B) is a view from the interior of the motor section (rear view). The terminal holder made of resin has a pair of end-bell engagement portions formed integrally at laterally opposite sides of the terminal holder. The paired end-bell engagement portions have respective claws. By virtue of the elastic force of the end-bell engagement portions, the claws of the end-bell engagement portions are latched in corresponding terminal-holder engagement recesses (see FIG. 2(A)) formed in the end bell. Thus, the terminal holder and the end bell can be assembled together through one-touch operation, thereby yielding an end bell assembly. However, the end bell assembly shown in FIG. 6 does not have a printed wiring board. When a printed wiring board is used, as shown in FIG. 4, the printed wiring board is fixedly held between the terminal holder and the end bell.

The motor is assembled in the following manner. First, the end bell shown in FIG. 2 is fitted into the opening portion of the motor casing. At this time, the rotating shaft of the motor section projects outward from the motor section through the second bearing housed in the bearing-holding portion of the end bell.

Next, as shown in FIG. 1, the fourth bearing and then the worm are fitted onto the rotating shaft until the fourth bearing almost butts against the bearing-holding portion of the end bell. In the case of a low-output motor, the fourth bearing may be eliminated. Subsequently, a portion of the rotating shaft is knurled. The worm is drawn in a direction of being drawn out from the shaft so as to be press-fitted onto the knurled portion of the rotating shaft. A motor assembly is thus formed. In this condition, the fourth bearing can rotate on the rotating shaft and can move leftward and rightward.

Next, as have been described with reference to FIG. 3, the terminal holder and a printed wiring board are assembled together as needed. The resultant terminal holder is attached to the end bell of the motor assembly, thereby forming the end bell assembly.

Next, the fourth bearing, which is movable leftward and rightward on the rotating shaft, is moved toward the projecting end of the rotating shaft beyond the ends of the integrally formed, paired claw portions of the terminal holder.

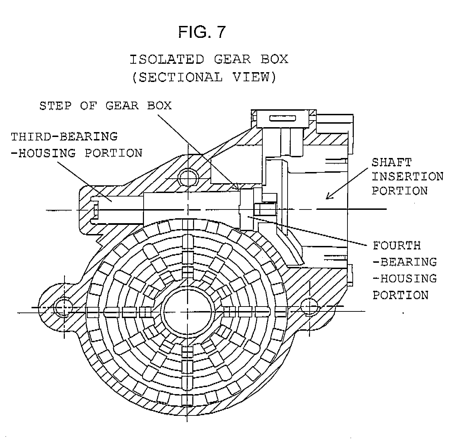

Next, the motor assembly is assembled with the gear box. FIG. 7 is a sectional view of the isolated gear box. The rotating shaft on which the worm, the fourth bearing, etc. are fixed is inserted into a shaft insertion portion of the gear box. Since, before insertion of the shaft, the third bearing is fixed in a third-bearing-housing portion of the gear box, when the rotating shaft is inserted in such a manner that the projecting end of the rotating shaft is pressed into the third bearing, the fourth bearing comes into contact with a step of the gear box and is thus prevented from proceeding further, thereby being positioned in a fourth-bearing-housing portion of the gear box. At this time, the integrally formed, paired claw portions of the terminal holder support the fourth bearing in the axial direction of the rotating shaft by means of the projecting ends of the claw portions. The motor assembly is thus completed.

## Claims

1. A motor equipped with a reducer comprising a motor section and a reducer section assembled to the motor section, the motor section having a rotating shaft supported by a bearing provided at a center of an end bell fitted to an opening portion of a motor casing, the rotating shaft extending to the exterior of the motor section, a projecting end of the extending rotating shaft being rotatably supported by a bearing provided within the reducer section, the reducer section having a gear box, a worm mounted on the extending rotating shaft accommodated in the gear box, a worm wheel meshed with the worm, and an output shaft positioned at a center of the worm wheel and configured to be rotatable together with the worm wheel, the motor **characterized in that:**
the end bell supports brush arms which hold a pair of corresponding brushes in contact with a commutator, and allows a pair of input terminals connected to the corresponding brush arms to extend therethrough and to project to the exterior of the end bell for electrical connection;
a terminal holder having a pair of terminals incorporated therein is provided, and the paired terminals include a pair of input connection portions contact-connected to the pair of corresponding input terminals projecting from the end bell, a pair of external terminals for establishing electrical connection outside the motor, and conductors for establishing electric wiring between the input connection portions and the external terminals; and
the terminal holder is assembled to the end bell from the outside of the motor section with a clearance formed therebetween, and electric connection is established between the paired input terminals and the paired input connection portions.

2. A motor equipped with a reducer according to claim 1, wherein a motor burnout protection element is incorporated into the end bell.

3. A motor equipped with a reducer according to claim 1, wherein a printed wiring board on which a noise killer element is mounted is inserted into the clearance formed between the terminal holder and the end bell and is fixedly held between the terminal holder and the end bell or by the terminal holder.

4. A motor equipped with a reducer according to claim 1, wherein an electric element is incorporated into the terminal holder.

5. A method of manufacturing a motor equipped with a reducer having a motor section and a reducer section assembled to the motor section, the motor section having a rotating shaft supported by a bearing provided at a center of an end bell fitted to an opening portion of a motor casing, the rotating shaft extending to the exterior of the motor section, a projecting end of the extending rotating shaft being rotatably supported by a bearing provided within the reducer section, the reducer section having a gear box, a worm mounted on the extending rotating shaft accommodated in the gear box, a worm wheel meshed with the worm, and an output shaft positioned at a center of the worm wheel and configured to be rotatable together with the worm wheel, the method **characterized by**:
allowing the end bell to support brush arms which hold a pair of corresponding brushes in contact with a commutator, and allowing a pair of input terminals connected to the corresponding brush arms to extend therethrough and to project to the exterior of the end bell for electrical connection;
providing a terminal holder having a pair of terminals incorporated therein, the paired terminals including a pair of input connection portions contact-connected to the pair of corresponding input terminals projecting from the end bell, a pair of external terminals for establishing electrical connection outside the motor, and conductors for establishing electric wiring between the input connection portions and the external terminals; and
assembling the terminal holder to the end bell from the outside of the motor section with a clearance formed therebetween, and establishing electric connection between the paired input terminals and the paired input connection portions.

6. A method of manufacturing a motor equipped with a reducer according to claim 5, wherein a motor burnout protection element is incorporated into the end bell.

7. A method of manufacturing a motor equipped with a reducer according to claim 5, wherein a printed wiring board on which a noise killer element is mounted is inserted into the clearance formed between the terminal holder and the end bell and is fixedly held between the terminal holder and the end bell or by the terminal holder.

8. A method of manufacturing a motor equipped with a reducer according to claim 5, wherein an electric element is incorporated into the terminal holder.

## Amended claims

### Amended claims under Art. 19.1 PCT

**1.** (amended) A motor equipped with a reducer comprising a motor section and a reducer section assembled to the motor section, the motor section having a rotating shaft supported by a bearing provided at a center of an end bell fitted to an opening portion of a motor casing, the rotating shaft extending to the exterior of the motor section, a projecting end of the extending rotating shaft being rotatably supported by a bearing provided within the reducer section, the reducer section having a gear box, a worm mounted on the extending rotating shaft accommodated in the gear box, a worm wheel meshed with the worm, and an output shaft positioned at a center of the worm wheel and configured to be rotatable together with the worm wheel, the motor **characterized in that:**
the end bell supports brush arms which hold a pair of corresponding brushes in contact with a commutator, and allows a pair of input terminals connected to the corresponding brush arms to extend therethrough and to project to the exterior of the end bell for electrical connection;
a terminal holder having a pair of terminals incorporated therein is provided, and the paired terminals include a pair of input connection portions contact-connected to the pair of corresponding input terminals projecting from the end bell, a pair of external terminals for establishing outside of the motor section with a clearance formed therebetween so as to enable a printed wiring board to be inserted into the clearance, and establishing electric connection between the paired input terminals and the paired input connection portions.

**6.** A method of manufacturing a motor equipped with a reducer according to claim 5, wherein a motor burnout protection element is incorporated into the end bell.

**7.** A method of manufacturing a motor equipped with a reducer according to claim 5, wherein a printed wiring board on which a noise killer element is mounted is inserted into the clearance formed between the terminal holder and the end bell and is fixedly held between the terminal holder and the end bell or by the terminal holder.

**8.** A method of manufacturing a motor equipped with a reducer according to claim 5, wherein an electric element is incorporated into the terminal holder.
